# EUROPÄISCHE PATENTSCHRIFT

(11) **EP 2 317 162 B1**
(45) Veröffentlichungstag und Bekanntmachung des Hinweises auf die Patenterteilung: **23.05.2012**
(21) Anmeldenummer: 09013829.8
(22) Anmeldetag: 03.11.2009
(51) Int. Cl.: F16B 37/04

(54) **Nutstein und Befestigungsvorrichtung bzw. Befestigungssystem**
Slot-nut and connecting device, resp.connecting system
Écrou de rainure et dispositif/système de fixation.

(43) Veröffentlichungstag der Anmeldung: 04.05.2011
(73) Patentinhaber: Knürr GmbH, 94424 Arnstorf (DE)
(72) Erfinder: Schneiderbauer, Siegfried, 94439 Rossbach (DE); Knab, Josef, 94439 Rossbach (DE); Heydorn, Klaus, verstorben (DE); Prinz, Alexander, 84389 Postmünster (DE); Feigl, Josef, 94424 Arnstorf (DE); Stepputat, Christian, 94034 Passau (DE); Spatenender, Werner, 84347 Pfarrkirchen (DE); Huber, Arthur, 94081 Fürstenzell (DE)
(74) Vertreter: Heim, Hans-Karl

(56) Entgegenhaltungen:
- DE-U1- 20 217 838
- DE-U1- 29 709 829

## Beschreibung

Die Erfindung betrifft einen Nutstein zum lösbaren Befestigen eines Objektes an einer Profilschiene mit einer T-ähnlichen Grundform, mit einem Nutsteinfuß, der als Basiskörper ausgebildet ist, und mit einem ersten Aufbaukörper, wobei der erste Aufbaukörper auf dem Basiskörper vorgesehen ist. Ferner wird eine Profilschiene mit einer hinterschnittenen, einen Kragen aufweisenden Nut, welche einen T-ähnlichen Querschnitt beschrieben.

Bekannte Nutsteine weisen meist einen T-förmigen Querschnitt auf. Sie dienen zum Befestigen eines Objektes in oder an einer Profilschiene. Profilschienen haben oft eine Nut, die an den Querschnitt des Nutsteins angepasst ist. Beispielsweise sind Profilschienen mit einer hinterschnittenen, einen Kragen aufweisenden Nut bekannt. Hierbei kann der Kragen durch Nutstege ausgebildet werden. Der Nutstein wird in die Nut der Profilschiene eingesetzt und anschließend durch Drehung in der Nut der Profilschiene verklemmt. Zum Entfernen des Nutsteins und damit auch des mit dem Nutstein verbundenen Objektes von beziehungsweise aus der Profilschiene muss der Nutstein wieder gelöst werden und in eine Entnahmeposition überführt werden.

Nachteilig an den bekannten Nutsteinen mit den bekannten Profilschienen ist aber, dass das Drehen des Nutsteins in eine definierte Verriegelungsposition nicht sichergestellt werden kann. Insbesondere hat es sich als problematisch herausgestellt, wenn die Nut und der Nutstein während des Verklemmens und/oder des Einsetzens selbst nicht eingesehen werden können. Dies kann beispielsweise darauf beruhen, dass das zu befestigende Objekt die Nut abdeckt, wobei der Nutstein im unteren Bereich des zu befestigenden Objektes vorgesehen ist.

In ähnlicher Weise hat es sich als äußerst schwierig erwiesen, das Objekt wieder zu lösen. Zu diesem Zweck muss der Nutstein in eine Entnahmeposition zurückgedreht werden. Wenn die Nut und der Nutstein aber nicht sichtbar sind, ist es schwer zu erkennen, wann der Nutstein in der richtigen Position zum Entfernen aus der Nut der Profilschiene angelangt ist.

Die DE 29 709 829 U1 beschreibt eine Tragkonstruktion, welche sich als Gerüst für Möbel eignet. In diesem Zusammenhang werden auch verschiedene Profilschienen mit unterschiedlichen Querschnitten gezeigt.

Aus der DE 202 17 838 U1 ist ein Nutstein zur Befestigung von Elementen an einer Profilschiene bekannt. Dieser Nutstein ist im Wesentlichen achsensymmetrisch zu einer mittleren Symmetrieachse ausgebildet.

Der Erfindung liegt die **Aufgabe** zugrunde, einen Nutstein zu schaffen, welche eine einfache Benutzung sowie eine sichere Verbindung des Nutsteins mit einer Profilschiene ermöglichen.

Die Aufgabe wird erfindungsgemäß durch einen Nutstein mit den Merkmalen des Anspruchs 1 gelöst.

Weitere vorteilhafte Ausführungen sind in den abhängigen Ansprüchen, der Beschreibung sowie in den Figuren und der Figurenbeschreibung angegeben.

Ein erfindungsgemäßer Nutstein ist dadurch weitergebildet, dass er eine erste Funktionsfläche zum Definieren einer Entnahmeposition des Nutsteins aus der Profilschiene und eine zweite Funktionsfläche zum Definieren einer Verriegelungsposition des Nutsteins in der Profilschiene aufweist. Ferner ist eine Einrichtung zum Verbinden mit dem Befestigungsmittel, welches mit dem zu befestigenden Objekt zusammenwirkt, vorgesehen.

Eine Profilschiene kann einen Querschnitt aufweisen, der asymmetrisch ausgebildet ist. Die Profilschiene besitzt eine lange seitliche Flanke und eine kurze seitliche Flanke. Diese beiden Flanken sind gegenüberliegend einander angeordnet.

Ein Grundgedanke der Erfindung kann darin gesehen werden, durch eine spezielle Formgebung des Nutsteins Funktionsflächen an dem Nutstein auszubilden, die zum einen eine Entnahmeposition und zum anderen die Verriegelungsposition des Nutsteins in Bezug zu einer Nut definieren. Durch das Zusammenwirken der Funktionsflächen mit der Nut einer Profilschiene, die eine an die Funktionsflächen angepasste Form aufweist, kann es erreicht werden, dass eine Entnahmeposition beispielsweise durch einen Anschlag des Nutsteins an einer Flanke oder einem Teil eines Nutsteges definiert wird. Hierdurch ist es möglich, blind die Entnahmeposition einzustellen und so den Nutstein aus der Nut zu entfernen, ohne die Nut beziehungsweise den Nutstein einzusehen.

In ähnlicher Weise ist eine zweite Funktionsfläche an dem oder durch den Nutstein ausgebildet, welche wiederum im Zusammenspiel mit der Formgebung der Profilschiene eine Verriegelungsposition definiert. Die Verriegelungsposition kann durch einen Anschlag des Nutsteins an der Innenfläche der Nut ausgebildet sein. Somit ist es bei der Verriegelungsposition möglich, diese zuverlässig einzustellen, ohne die Nut beziehungsweise den Nutstein einsehen zu können.

Ferner ist ein zweiter Aufbaukörper vorgesehen, welcher auf dem ersten Aufbaukörper aufgesetzt sein kann. Ferner ist die erste Funktionsfläche am ersten Aufbaukörper und die zweite Funktionsfläche am zweiten Aufbaukörper ausgebildet. Es ist also pro Funktionsfläche ein Aufbaukörper vorgesehen. Dies ermöglicht bei dem Design des Nutsteins, große Freiheitsgrade, da jeweils nur ein Aufbaukörper zum Ausbilden einer Funktionsfläche, ausgelegt sein muss. Damit kann der erste Aufbaukörper die erste Funktionsfläche zum Definieren der Entnahmeposition, beispielsweise mit einem entsprechenden Anschlag an einer Flanke der Nut definieren, wohingegen der zweite Aufbaukörper die zweite Funktionsfläche als einen Anschlag an einem Kragen der Nut oder einem Nutsteg ausbildet. Grundsätzlich ist es jedoch ebenfalls möglich, beide Funktionsflächen an oder durch einen Aufbaukörper auszubilden.

Vorteilhaft ist es ferner, wenn die erste Funktionsfläche, die zweite Funktionsfläche und der Basiskörper ausgebildet sind, um eine Drehung des Nutsteins in der Profilschiene um einen Winkel, insbesondere um 90° zu ermöglichen. Hierbei kann der Startbereich des Winkels durch die erste Funktionsfläche definiert werden und der Endbereich des Winkels durch die zweite Funktionsfläche definiert werden. Die Drehachse des Nutsteins verläuft bevorzugt durch die Drehachse des Befestigungsmittels, welches in beziehungsweise an dem Nutstein befestigt werden kann. Eine Drehung um 90° ermöglicht es, den Nutstein beispielsweise mit einer länglichen Form auszustatten und so entlang der Nut einzusetzen und anschließend zum Befestigen um 90° zu drehen, so dass die längliche Grundform nach der Drehung quer zur Längsrichtung der Nut verläuft. Hierdurch kann der Nutstein in der Nut verklemmt werden. Hierbei kann die Entnahmeposition als Startbereich des Winkels und die Verriegelungsposition als Endbereich des Winkels angesehen werden. Die Entnahmeposition ist grundsätzlich auch mit der Einsetzposition gleichzusetzen.

Die Einrichtung zum Verbinden mit einem Befestigungsmittel im Nutstein kann beliebig ausgeführt sein. Bevorzugt ist hierbei, wenn die Einrichtung zum Verbinden mit einem Befestigungsmittel als ein in den Nutstein eingeschnittenes Innengewinde ausgebildet ist. Bei einem derartigen Ausbilden des Nutsteins kann das Befestigungsmittel dann mit einem zum Innengewinde des Nutsteins komplementären Außengewinde ausgebildet sein. Hierdurch ist es möglich, den Nutstein, nachdem er in die Verriegelungsposition überführt wurde, zusätzlich in der Nut zu verklemmen, indem er durch das Zusammenspiel von Außen- und Innengewinde nach oben in Richtung der Nutstege gezogen werden kann. Somit wird eine form- und kraftschlüssige Verbindung ausgebildet.

Das Befestigungsmittel ist hierbei bevorzugterweise an dem zu befestigenden Objekt vorgesehen, so dass der Nutstein in die Richtung des Objektes gezogen wird. Der Nutstein befindet sich jedoch in der Nut, so dass er nicht in Richtung des Objektes bewegt werden kann, sondern durch die Drehung des Befestigungsmittels das Objekt näher an den Nutstein herangezogen wird. Normalerweise ist das zu befestigende Objekt größer als die Öffnung der Nut, wodurch der Nutstein durch den entstehenden Zug nach oben an die Unterseite des Kragens der Nut gepresst wird. Hierdurch wird der Nutstein zusätzlich am Kragen der Nut verklemmt.

Es hat sich als vorteilhaft herausgestellt, wenn die Einrichtung zum Verbinden mit dem Befestigungsmittel als durch den Nutstein hindurch verlaufende Einrichtung, insbesondere als ein durch den Nutstein hindurch verlaufendes Innengewinde, ausgebildet ist. Somit ist es möglich, das Befestigungsmittel beliebig weit in den Nutstein hineinzudrehen. Ist das Außengewinde des Befestigungsmittels derart dimensioniert, dass es länger ausgebildet ist, als der Nutstein hoch ist, so kann das Befestigungsmittel durch den Nutstein hindurchgedreht werden, wodurch ein Bereich des Befestigungsmittels unten aus dem Nutstein wieder herausgedreht wird. Hierdurch kann erreicht werden, dass, wenn das Befestigungsmittel an der Unterseite des Nutsteins herausragt, der Nutstein zwischen dem herausragenden Teil des Befestigungsmittels und den Nutstegen beziehungsweise dem Kragen der Nut verklemmt werden kann.

Bei der Auslegung der Form des Nutsteins ist maßgeblich die Form, insbesondere der Querschnitt der Nut der Profilschiene, in die der Nutstein eingesetzt werden soll, zu berücksichtigen. Unabhängig von der exakten Ausführung der Form des Nutsteins hat es sich als vorteilhaft herausgestellt, wenn der Basiskörper des Nutsteins im Wesentlichen die Grundfläche eines ersten länglichen Rechteckes und der erste Aufbaukörper im Wesentlichen die Grundfläche eines zweiten länglichen Rechteckes aufweist. Hierbei kann das zweite längliche Rechteck die gleiche oder eine kleinere Breite wie das erste Rechteck aufweisen. Es ist bevorzugt, wenn das zweite Rechteck eine geringere Länge als das erste Rechteck besitzt.

Weiterhin kann der zweite Aufbaukörper eine kleinere Grundfläche als der erste Aufbaukörper aufweisen. Vorteilhaft ist es, wenn die Grundfläche des zweiten Aufbaukörpers im Wesentlichen die Form eines Rechteckes mit angesetztem Dreieck aufweist. Hierbei ist es bevorzugt, dass das erste längliche Rechteck eine Breite aufweist, die etwas geringer als die Öffnung der Nut ist. So kann der Nutstein in einer Ausrichtung längs zur Nut in die Nut eingesetzt werden. In diesem Zusammenhang sollen der erste Aufbaukörper und zweite Aufbaukörper nicht breiter ausgeführt sein als der Basiskörper.

In ähnlicher Weise ist es bevorzugt, wenn die Länge des ersten länglichen Rechteckes in etwa der Breite der Nut entspricht. Hierbei ist zu berücksichtigen, dass der Nutstein in einer Längsposition in die Nut durch die Öffnung der Nut eingesetzt wird und anschließend in der Nut gedreht wird. Die Länge des Basiskörpers muss demnach so dimensioniert sein, dass eine Drehung in der Nut möglich ist. Hierbei sollte der Basiskörper jedoch so lang wie möglich ausgeführt werden, so dass seine Länge im Wesentlichen der Breite der Nut entspricht.

Die Grundfläche des Basiskörpers als längliches Rechteck ist vergleichbar mit der bekannten Basisform von T-förmigen Nutsteinen. Bevorzugt ist die Höhe des ersten Basiskörpers an die Höhe der kurzen seitlichen Flanke der Nut angepasst. Dies bedeutet, dass der Basiskörper den Kragen beziehungsweise den Nutsteg, welcher die kurze seitliche Flanke nach oben hin abschließt, hinter- oder untergreifen kann. Die Grundfläche kann aber auch eine andere Geometrie aufweisen.

In ähnlicher Weise besitzt die Kombination aus Basiskörper und erstem Aufbaukörper eine Höhe, die im Wesentlichen der Höhe der langen seitlichen Flanke entspricht. Hierbei ist die Höhe derart gewählt, dass der Basiskörper mit aufgesetztem ersten Aufbaukörper den Kragen beziehungsweise den Nutsteg, welcher die lange seitliche Flanke nach oben hin abschließt, hinter- oder untergreifen kann.

Die erste Funktionsfläche kann durch den ersten Aufbaukörper derart ausgebildet sein, dass, bedingt durch die unterschiedlichen Höhen der Flanken der Nut, ein Bereich des ersten Aufbaukörpers, welcher beim Eingriff unter den Kragen beziehungsweise Nutsteg der langen seitlichen Flanke greifen kann, nicht unter den Kragen beziehungsweise Nutsteg der kurzen Flanke greifen kann. Hierdurch wird ein Anschlag durch den ersten Aufbaukörper ausgebildet, so dass der Nutstein bei einer Drehung nicht weiter als zu dem Anschlag drehen kann. Diese Position wird auch als Entnahme- oder Einsetzposition bezeichnet.

In ähnlicher Weise kann der zweite Aufbaukörper ausgebildet sein. Hierbei ist der zweite Aufbaukörper auf dem ersten Aufbaukörper zurückversetzt angeordnet, so dass er, wenn der Basiskörper mit dem ersten Aufbaukörper unter den Kragen der langen Flanke greift, das Untergreifen nicht behindert. Er ist jedoch so ausgebildet, dass er, nachdem der Basiskörper und der erste Aufbaukörper beziehungsweise Teile davon unter den Nutsteg, welcher auch als Kragen bezeichnet werden kann, der länglichen Flanke gegriffen haben, mit dem Kragen der kurzen Flanke einen Anschlag ausbildet. Hierdurch wird erreicht, dass der Nutstein nicht weiter gedreht werden kann und so zumindest Teilbereiche des Basiskörpers und des Aufbaukörpers in der Verriegelungsposition unterhalb des Kragens des Nutsteins positioniert sind.

Weiterhin betrifft die Erfindung eine Befestigungsvorrichtung zum lösbaren Befestigen eines Objektes an oder in einer Profilschiene. Diese Befestigungsvorrichtung weist einen Hauptkörper, ein Befestigungsmittel und eine Aufnahme und Führung in dem Hauptkörper für das Befestigungsmittel auf. Ferner ist ein erfindungsgemäßer Nutstein vorgesehen, wobei der Nutstein an einem Ende des Befestigungsmittels angebracht ist.

Vorteilhaft ist es, wenn das Befestigungsmittel ein Außengewinde aufweist und das Außengewinde mit einer Gewindesicherung ausgestattet ist. Eine Gewindesicherung kann beispielsweise ein nylonummantelter Carbonfaden sein. Die Gewindesicherung erhöht den Reibwert zwischen dem Außengewinde des Befestigungsmittels und dem Innengewinde des Nutsteins. Hierdurch wird erreicht, dass beim Drehen des Befestigungsmittels auch der Nutstein mitgedreht wird. Dies bietet den Vorteil, dass bei einer Betätigung des Befestigungsmittels, also einem Drehen, ohne Sicht auf die Nut und den Nutstein zuerst der Nutstein in der Nut gedreht wird, bis dieser die durch die zweite Funktionsfläche definierte Verriegelungsposition erreicht. Erst dann ist der Widerstand, den der Nutstein beziehungsweise die Funktionsfläche mit dem Kragen der Nut zusammen ausbildet, größer als der Reibwert im Gewinde des Nutsteins, so dass erst dann beim Drehen des Befestigungsmittels dieses weiter in den Nutstein hereingeschraubt wird.

Bevorzugt ist es, wenn das Befestigungsmittel im Bereich des Basiskörpers des Nutsteins eine Sperreinrichtung aufweist. Diese Sperreinrichtung kann das Entfernen des Befestigungsmittels aus dem Nutstein verhindern. Beispielsweise kann, nachdem der Nutstein auf das Befestigungsmittel aufgeschraubt wurde, das Befestigungsmittel im unteren Bereich, in dem es sich außerhalb des Nutsteins befindet, leicht aufgespreizt werden. Dies kann beispielsweise mit einem Pressvorgang oder im Rahmen einer Prägung erreicht werden. So wird ein ungewolltes Entfernen des Nutsteins von dem Befestigungsmittel erschwert bzw. ausgeschlossen. Es ist aber weiterhin ein Drehen des Nutsteins im Rahmen des Gewindes des Befestigungsmittels möglich. Vorteilhaft ist es, wenn das Innengewinde des Nutsteins im Bereich des Basiskörpers des Nutsteins eine Erweiterung aufweist, so dass der Bereich des Befestigungsmittels, welcher die Sperreinrichtung aufweist, zumindest teilweise in den Nutstein aufgenommen werden kann. Somit kann ein unterer, im Wesentlichen planer, Abschluss des Nutsteins ausgebildet werden.

Des Weiteren ist es bevorzugt, wenn im Bereich der Aufnahme und Führung im Hauptkörper eine Federeinrichtung vorgesehen ist, um das Befestigungsmittel mit dem Nutstein in Richtung des Hauptkörpers vorzuspannen. Diese Federeinrichtung muss beim Einsetzen des Nutsteins und beim Überführen des Nutsteins in die Verriegelungsposition überwunden werden. Durch die Federeinrichtung wird erreicht, dass, wenn der Nutstein aus der Verriegelungsposition in die Entnahmeposition überführt wird, durch die Vorspannung der Feder der Nutstein zumindest teilweise aus der Nut herausgezogen wird. Hierdurch wird eine ungewollte Verriegelung des Nutsteins in der Nut zumindest erschwert.

Wenn die Nut und der Nutstein nicht eingesehen werden können, sollte erreicht werden, dass der Nutstein erst gedreht und in die Verriegelungsposition überführt werden kann, wenn er sich weit genug in der Nut befindet. Hierzu ist eine Drehschutzeinrichtung für das Befestigungsmittel vorgesehen. Diese Drehschutzeinrichtung kann durch eine Krafteinwirkung auf das Befestigungsmittel in Richtung des Nutsteins überwindbar ausgebildet sein. Die Drehschutzeinrichtung kann beispielsweise als Sechskant an der Befestigungseinrichtung ausgebildet sein, wobei der Hauptkörper eine entsprechende komplementäre Aufnahme aufweist. In Verbindung mit der Federeinrichtung, welche im Bereich der Aufnahme und Führung um das Befestigungsmittel vorgesehen ist und das Befestigungsmittel mit dem Nutstein in Richtung des Hauptkörpers vorspannt, wird die Drehschutzeinrichtung beziehungsweise Teile hiervon in die entsprechende Aufnahme in dem Hauptkörper gedrückt.

Wenn der Nutstein in die Nut eingesetzt werden soll und in die Verriegelungsposition überführt werden soll, muss zuerst die Drehschutzeinrichtung überwunden werden. Hierzu wird das Befestigungsmittel gegen die Vorspannung der Federeinrichtung nach unten gedrückt. Die Drehschutzeinrichtung ist hierbei so dimensioniert, dass sie eine Drehung des Befestigungsmittels erst dann freigibt, wenn der Nutstein weit genug in die Nut eingesetzt wurde. Dies kann beispielsweise über eine längenmäßige Ausdehnung der Drehschutzeinrichtung an dem Befestigungsmittel realisiert werden.

In einer bevorzugten Ausführungsform ist eine Anzeigeeinrichtung für den Verriegelungszustand des Nutsteins vorgesehen. Diese Anzeigeeinrichtung kann beispielsweise an dem Befestigungsmittel ausgebildet sein. Im Zusammenhang mit der vorgespannten Position des Befestigungsmittels kann das Befestigungsmittel derart dimensioniert sein, dass es in dem Zustand, in dem der Nutstein sich nicht in der Verriegelungsposition befindet, etwas aus dem Hauptkörper der Befestigungsvorrichtung hinausragt. Zusätzlich kann eine Flanke oder Seite des Befestigungsmittels, welches im Nichtverriegelungszustand aus der Befestigungsvorrichtung hinausragt, farblich gekennzeichnet sein, so dass der Nichtverriegelungszustand leicht zu erkennen ist. Wenn der Nutstein in die Nut eingesetzt und verriegelt ist, ist das Befestigungsmittel in Richtung der Nut gezogen. Daher befindet sich das Befestigungsmittel nun tiefer in der Befestigungsvorrichtung, so dass eine farbliche Kennzeichnung an der Flanke des Befestigungsmittels nicht mehr sichtbar ist.

Bevorzugt wird die Befestigungseinrichtung mit einer erfindungsgemäßen Profilschiene als Befestigungssystem eingesetzt. Hierbei kann die Befestigungseinrichtung in oder an dem zu befestigenden Objekt vorgesehen sein.

Vorteilhaft ist es, wenn die Drehschutzeinrichtung derart ausgebildet ist, dass erst nach dem Einführen des Nutsteins in die Nut der Profilschiene eine Drehung des Befestigungsmittels ermöglicht ist. Durch eine derartige Konstruktion wird erreicht, dass das Befestigungsmittel mit dem Nutstein nicht gedreht werden kann, wenn sich der Nutstein nicht in der Nut befindet. Ansonsten könnte fälschlicherweise angenommen werden, dass sich der Nutstein in der Verriegelungsposition befindet, obwohl er nicht in die Nut eingesetzt ist. Dies ist insbesondere dann wichtig, wenn der Nutstein oder die Nut oder beides bei der Montage nicht einsehbar sind.

Das erfindungsgemäße Befestigungssystem kann beispielsweise für die Befestigung von Dosenleisten an Profilschienen eines Geräteschrankes oder Serverschrankes eingesetzt werden. Hierbei ist es auch angedacht, mehrere Befestigungsvorrichtungen an einer Dosenleiste vorzusehen. Abhängig von der Länge kann es vorteilhaft sein am Beginn und am Ende der Dosenleiste jeweils eine Befestigungsvorrichtung vorzusehen.

Bei schweren Gegenständen oder für eine besondere sichere Montage können auch im Mittelbereich oder in weiteren Bereichen des Objektes zusätzliche Befestigungsvorrichtungen vorgesehen werden. Gerade bei diesen mittleren Befestigungsvorrichtungen ist es oft nicht möglich, den Nutstein und die Nut der Befestigungsvorrichtung einzusehen, so dass sich hierbei die Vorteile der erfindungsgemäßen Konstruktion deutlich zeigen.

Die Erfindung wird nachfolgend anhand von Ausführungsbeispielen und schematischen Zeichnungen näher erläutert. In diesen Zeichnungen zeigen:
- Fig. 1: einen Querschnitt einer Profilschiene;
- Fig. 2: eine perspektivische Darstellung eines erfindungsgemäßen Nutsteins;
- Fig. 3: eine perspektivische Darstellung eines erfindungsgemäßen Nutsteins;
- Fig. 4: eine Aufsicht auf einen erfindungsgemäßen Nutstein;
- Fig. 5a: einen Schnitt durch einen erfindungsgemäßen Nutstein;
- Fig. 5b: einen Schnitt durch einen erfindungsgemäßen Nutstein;
- Fig. 6: einen erfindungsgemäßen Nutstein in Verriegelungsposition in einer Pro- filschiene;
- Fig. 7: einen Schnitt durch einen Hauptkörper eines erfindungsgemäßen Befes- tigungssystems;
- Fig. 8: einen Schnitt durch ein erfindungsgemäßes Befestigungssystem; und
- Fig. 9: eine perspektivische Teilansicht eines erfindungsgemäßen Befestigungs- systems.

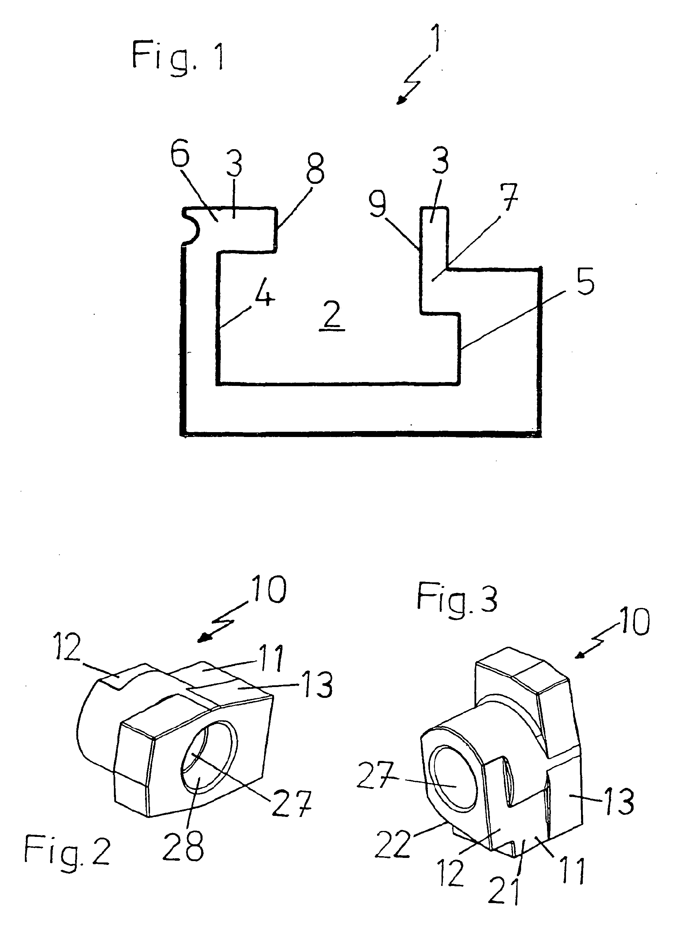

In Fig. 1 ist der Querschnitt einer Profilschiene 1 beispielhaft dargestellt. Die Profilschiene 1 weist eine Nut 2 auf. Die Nut 2 weist einen Kragen 3 auf, welcher durch die Nutstege 6 und 7 ausgebildet wird. Die Nut 2 ist im Gegensatz zu herkömmlichen, meist T-förmigen Nuten asymmetrisch ausgebildet. Das heißt, die Nut 2 weist eine lange Flanke 4 und eine der langen Flanke 4 gegenüberliegende kurze Flanke 5 auf. Um trotz der unterschiedlichen Flanken 4, 5 eine im Wesentlichen ebene Oberfläche auszubilden, ist auf der Seite der Nut 2 mit der langen Flanke 4 ein kürzerer Nutsteg 6 mit einer kurzen Nutstegflanke 8 vorgesehen. Gegenüber dem kurzen Nutsteg 6 befindet sich ein langer Nutsteg 7, der eine lange Nutstegflanke 9 aufweist.

An die Nut 2 ist ein erfindungsgemäßer Nutstein 10 angepasst, welcher zumindest teilweise komplementär zu der Nut 2 ausgebildet ist.

In den Figuren 2 und 3 wird der erfindungsgemäße Nutstein 10 in zwei unterschiedlichen perspektivischen Darstellungen gezeigt. Insbesondere in Fig. 3 wird die teilweise komplementäre Form des Nutsteins 10 zur Nut 2 verdeutlicht. Der Nutstein 10 selbst ist aus einem Basiskörper 13 aufgebaut, der auch als Nutsteinfuß bezeichnet werden kann. Auf dem Basiskörper 13 ist ein erster Aufbaukörper 11 vorgesehen. Auf diesem ersten Aufbaukörper 11 befindet sich ein weiterer, zweiter Aufbaukörper 12. Bevorzugt ist der Nutstein 10 einstückig ausgebildet und kann beispielsweise durch Pressen, Gießen oder Fräsen hergestellt werden. Der Nutstein 10 kann aus Metall, einer Metalllegierung und/oder einem harten Kunststoff bestehen. Durch den Nutstein 10 hindurch verläuft ein in den Figuren lediglich angedeutetes Innengewinde 27.

In Fig. 2 ist verdeutlicht, dass das Innengewinde 27 im unteren Bereich, das heißt im Bereich des Nutsteinfußes beziehungsweise des Basiskörpers 13 eine Erweiterung 28 aufweist. In das Innengewinde 27 kann ein Befestigungsmittel 38 mit einem zum Innengewinde 27 komplementären Außengewinde 39 eingeschraubt werden. Hierbei ist es möglich, das Befestigungsmittel 38 durch den Nutstein 10 hindurchzuschrauben, da das Innengewinde 27 und die entsprechende Öffnung durch den Nutstein 10 hindurch verlaufen.

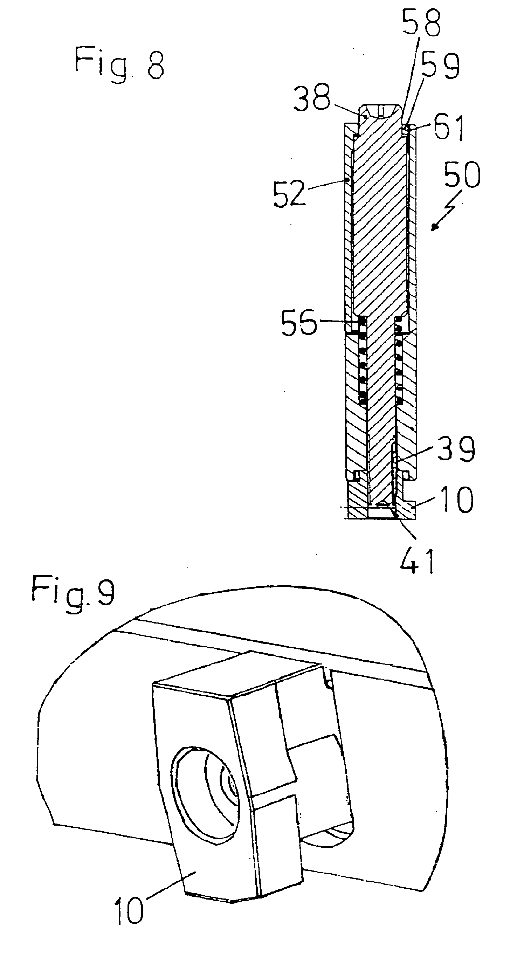

Um zu verhindern, dass der Nutstein 10 vom Befestigungsmittel 38 entfernt werden kann, kann das Befestigungsmittel 38 in seinem unteren Bereich leicht gespreizt ausgeführt sein. Wird nun der Nutstein 10 in Richtung des unteren Endes des Befestigungsmittels 38 (Fig. 8) entlang des Außengewindes 39 gedreht, so definiert die Verbreiterung des Befestigungsmittels 38 die Endposition der möglichen Drehung. Hierbei ist es vorgesehen, dass die Verbreiterung des Befestigungsmittels 38 in der Erweiterung 29 des Nutsteins 10 aufgenommen werden kann. Somit ist es möglich, das Befestigungsmittel 38 in dem Nutstein 10 derart zu befestigen, dass es nicht nach unten aus dem Nutstein 10 hervorsteht.

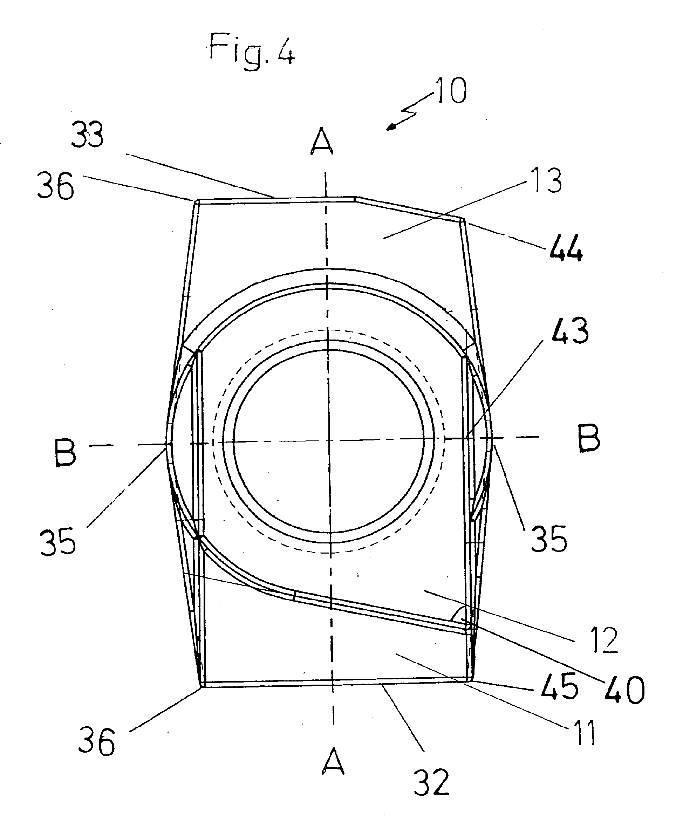

In Fig. 4 ist eine Aufsicht auf einen erfindungsgemäßen Nutstein 10 dargestellt. Hierbei ist der stufenartige Aufbau des Nutsteins 10 verdeutlicht. Der zweite Aufbaukörper 12 wird im Wesentlichen aus einem Rechteck mit einem angesetzten Dreieck ausgebildet. Hierbei bildet die Flanke des Dreieckes mit der ersten Querseite 32 des Nutsteins 10 bevorzugt einen Winkel zwischen 11° und 15°, insbesondere von etwa 13° aus. Am Dreieck beträgt der Winkel 40 demnach zwischen 79° und 75°, insbesondere 77°. Ein ähnlicher oder gleicher Winkel kann auch an der zweiten Querseite 33 mittels der Abschrägung 34 ausgebildet sein. Die Ausbauchung 35 definiert bevorzugt mit der geraden Verbindung der beiden Ecken 36 jeweils einen Winkel zwischen 5° und 10°, insbesondere von ungefähr 7,5°. Durch die Ausbauchung 35 auf der gegenüberliegenden Seite ist ein Winkel zwischen 4° und 9°, insbesondere von ca. 6,2° zwischen der geraden Verbindung der Ecke 44 mit dem Mittelbereich 43 und der Außenkontur gebildet. In ähnlicher Weise ist durch die Ausbauchung 35 ein Winkel zwischen Außenkontur und der direkten Verbindung der Ecke 45 mit dem Mittelbereich 43 von ca. 5,5° vorgesehen.

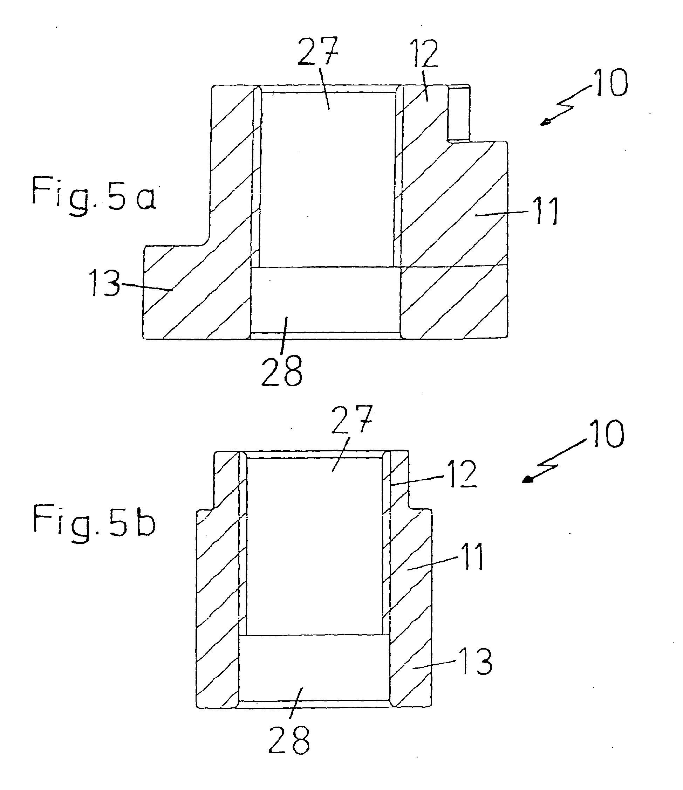

In den Figuren 5a und 5b sind jeweils Schnitte durch den erfindungsgemäßen Nutstein 10 dargestellt. Hierbei ist in Fig. 5a ein Schnitt entlang einer Ebene dargestellt, welche mittig längs durch den Nutstein verläuft und in Fig. 4 mit A-A bezeichnet ist. In Fig. 5b wiederum ist, ein Schnitt entlang einer Ebene, welche mittig quer durch den Nutstein vorgesehen ist, gezeigt und in Fig. 4 mit B-B gekennzeichnet ist.

In Fig. 5a sind die einzelnen Körper, welche durch den Aufbau des Nutsteins 10 aus dem Basiskörper 13, dem ersten Aufbaukörper 11 und dem zweiten Aufbaukörper 12 definiert werden, verdeutlicht. Durch den Nutstein 10 verläuft das Innengewinde 27, welches mit der Erweiterung 28 im Bereich des Basiskörpers 13 endet. Über dieses Innengewinde kann das Befestigungsmittel 38, welches das Außengewinde 39 aufweist, mit dem Nutstein verbunden werden.

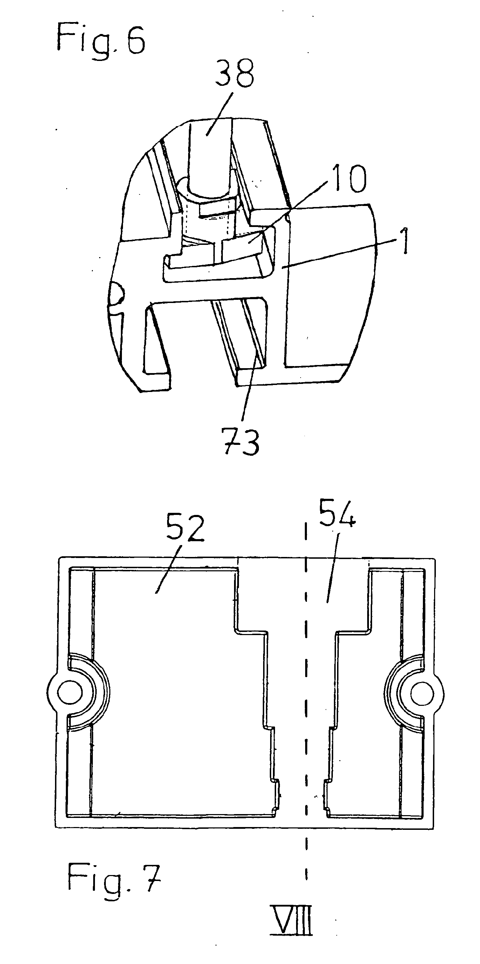

In Fig. 6 ist ein Nutstein 10 dargestellt, welcher in eine Profilschiene 1 mit einer Nut 2 eingesetzt ist. Der Nutstein 10 befindet sich hierbei in der Verriegelungsposition. Im unteren Bereich der Fig. 6 ist eine herkömmliche, T-förmige Nut 73 dargestellt, um die Unterschiede zu der Profilschiene 1 mit der Nut 2 zu verdeutlichen.

Im Folgenden wird nun die Funktion des Nutsteins 10, insbesondere seiner beiden Funktionsflächen 21 und 22 genauer beschrieben. Der Nutstein 10 wird in die Nut 2 eingesetzt. Hierbei ist der Nutstein 10 längs zur Nut 2 ausgerichtet. Er weist eine Breite auf, welche etwas geringer als die Öffnung der Nut 2 ist. Anschließend wird der Nutstein 10 um ca. 90° im Uhrzeigersinn gedreht. Die Drehung erfolgt bis die zweite Funktionsfläche 22 mit der Nutstegflanke 8 in Berührung kommt. Hierbei bildet der zweite Aufbaukörper 12 mit der zweiten Funktionsfläche 22 und der Nutstegflanke 8 einen Anschlag aus. Die Dimensionierung hierbei ist derart, dass die zweite Funktionsfläche 22 derart ausgebildet ist, dass die Funktionsfläche 22 die weitere Drehung des Nutsteins 10 durch einen Kontakt an der Nutsteinflanke 8 verhindert, wenn der Nutstein 10 sich im Wesentlichen quer in der Nut 2 befindet. Diese Position, welche als Verriegelungs- oder Endposition bezeichnet wird, ist in Fig. 6 dargestellt.

Sobald der Nutstein 10 die Verriegelungsposition erreicht hat, kann er sich nicht weiter in der Nut 2 drehen. Wird das Befestigungsmittel 38 nun weiter gedreht, so wird, bedingt durch das Ausbilden des Nutsteins 10 mit einem Innengewinde 27 und die Ausbildung des Befestigungsmittels 38 mit einem Außengewinde 39, der Nutstein 10 nach oben gezogen, so dass er von unten an die beiden Nutstege 6 und 7 gedrückt wird. Somit wird der Nutstein 10 innerhalb der Nut 2 fixiert.

Zum Herausnehmen des Nutsteins 10 wird das Befestigungsmittel 38 gegen den Uhrzeigersinn gedreht. So dreht sich auch der Nutstein 10 gegen den Uhrzeigersinn. Die Endposition der Drehung des Nutsteins 10 wird durch die erste Funktionsfläche 21, welche an dem ersten Aufbaukörper 11 ausgebildet ist, definiert. Die Funktionsfläche 21 ist derart dimensioniert, dass sie mit der Nutstegflanke 9 einen Anschlag ausbildet. Hierbei sind die erste Funktionsfläche 21 und die Nutstegflanke 9 so gewählt, dass sich der Nutstein 10 im Wesentlichen in einer Längsausrichtung zur Nut 2 befindet. Diese Position kann auch als Entnahme- oder Einsetzposition bezeichnet werden. In dieser Position ist es möglich, den Nutstein 10 nach oben aus der Nut 2 herauszunehmen.

Bei der Dimensionierung des Nutsteins 10 wird im Zusammenspiel mit der asymmetrischen Form der Nut 2 darauf geachtet, dass sich in der Verriegelungsposition der Nutstein 10 in einer Position befindet, in der er im Wesentlichen den Querschnitt der Nut ausfüllt.

Um zu erreichen, dass sich der Nutstein 10 bei einer Drehung des Befestigungsmittels 38 mitdreht und der Nutstein 10 nicht in einer Position verbleibt und lediglich das Befestigungsmittel 38 aus dem Nutstein heraus oder in den Nutstein 10 hineingedreht wird, kann das Innengewinde 27 des Nutsteins 10 und/oder das Außengewinde 39 des Befestigungsmittels 38 eine Gewindesicherung aufweisen. Die Gewindesicherung sollte derart dimensioniert sein, dass sie, wenn das Befestigungsmittel 38 gedreht wird, den Nutstein 10 mitdreht, bis dieser in der Verriegelungs- oder Entnahmeposition, welche durch die erste Funktionsfläche 21 oder die zweite Funktionsfläche 22 definiert wird, angekommen ist. Durch die Gewindesicherung wird der Reibwert im Gewinde des Nutsteins 10 mit dem Befestigungsmittel 38 erhöht. Beispielsweise kann eine Gewindesicherung nach DIN267T28 ausgeführt sein.

In Fig. 7 ist ein Schnitt durch den Hauptkörper 52 einer erfindungsgemäßen Befestigungsvorrichtung 50 dargestellt.

Fig. 8 zeigt einen Schnitt entlang der Linie VIII aus Fig. 7 durch die erfindungsgemäße Befestigungsvorrichtung 50, wobei hier im Gegensatz zu Fig. 7 das Befestigungsmittel 38, der Nutstein 10 und eine Feder 56 eingebaut sind.

In dem Hauptkörper 52 der Befestigungseinrichtung 50 ist eine Aufnahme und Führung 54 für das Befestigungsmittel 38 vorgesehen. In dieser Aufnahme und Führung 54 kann das Befestigungsmittel 38 nach oben und unten in einem gewissen Spielraum bewegt werden. Zusätzlich ist das Befestigungsmittel 38 mit einem vergrößerten Mittelkörper ausgebildet. Zwischen diesem Mittelkörper und einem Vorsprung im Hauptkörper 52 der Befestigungsvorrichtung 50 ist eine Feder 56 eingesetzt. Die Feder 56 spannt das Befestigungsmittel 38 mit angesetztem Nutstein 10 vor. Hierdurch werden der Nutstein 10 und das Befestigungsmittel 38 in eine Standardposition nach oben an den Hauptkörper 52 herangezogen.

Der Kopf des Befestigungsmittels 38 kann beispielsweise als Schraubenkopf für einen Schlitz- oder Kreuzschraubendreher ausgebildet sein. Ebenfalls ist es möglich, ihn als Aufnahme für einen Inbus oder einer anderen Schraubenkopfform auszubilden. Im oberen Bereich des Hauptkörpers 52 befindet sich ein Vorsprung, welcher verhindert, dass das Befestigungsmittel 38, welches durch die Feder 56 nach oben gedrückt wird, aus dem Hauptkörper 52 herausgedrückt wird. Dies wird zusätzlich durch den Nutstein 10, welcher im unteren Bereich des Befestigungsmittels 38 befestigt ist, verhindert.

Im unteren Bereich des Befestigungsmittels 38 ist eine Prägung 41 vorgesehen, welche das Befestigungsmittel 38 verbreitert. Hierdurch wird verhindert, dass das Befestigungsmittel 38 aus dem Nutstein 10 herausgeschraubt werden kann und somit der Nutstein 10 von dem Befestigungsmittel 38 gelöst wird. Um diese Verbreiterung aufzunehmen, ist der Nutstein 10 im unteren Bereich, insbesondere im Bereich des Basiskörpers 13, etwas verbreitert gegenüber dem Innengewinde 27 ausgeführt.

Im unteren Bereich des Hauptkörpers 52 ist eine Aufnahme für Teilbereiche des Nutsteins 10 vorgesehen. Insbesondere kann in der Aufnahme der zweite Aufbaukörper 12 aufgenommen. Da der Nutstein 10 asymmetrisch ausgeführt ist, kann er nur auf eine Weise in die Nut eingesetzt werden, soll er noch in der Nut drehbar sein. Aus diesem Grund ist die Aufnahme im unteren Bereich des Hauptkörpers 52 ausgebildet. Hierdurch wird erreicht, dass der Nutstein in seiner Anfangs- oder Standardposition definiert positioniert ist und somit richtig in die Nut 2 der Profilschiene 10 eingesetzt werden kann.

Um den Nutstein 10 zu drehen ist es erforderlich, den Nutstein 10 gegen die Feder 56 aus dem Hauptkörper 52 der Befestigungsvorrichtung 50 etwas hinauszudrücken. Hierzu wird die Befestigungsvorrichtung auf der Nut positioniert und von oben auf das Befestigungsmittel 38, beispielsweise mit einem Schraubendreher, gedrückt.

Ein Teil des oberen Bereichs des Befestigungsmittels 38 kann beispielsweise als Sechskant 58 ausgebildet sein. Zusätzlich ist der Hauptkörper 52 mit einer entsprechenden Sechskantaufnahme 59 ausgebildet, welche komplementär zu der Sechskantform 58 des Befestigungsmittels 38 ausgebildet ist. Hierdurch wird erreicht, dass das Befestigungsmittel 38 erst gegen die Federkraft der Feder 56 nach unten gedrückt werden muss, bevor eine Drehung möglich ist, da anderenfalls der Sechskant 58 in der Sechskantaufnahme 59 eine Drehung verhindert. Das Zusammenspiel aus Sechskant 58 und Sechskantaufnahme 59 kann auch als Drehschutzeinrichtung 61 bezeichnet werden.

Ist die Befestigungsvorrichtung 50 auf der Profilschiene 1 aufgebracht und der Nutstein 10 auf der Nutöffnung positioniert, wird das Befestigungsmittel 38 zuerst durch eine Krafteinwirkung in Richtung des Nutsteins 10 aus der Aufnahme für den Sechskant 58 herausgedrückt und anschließend gedreht. Durch das Herunterdrücken des Befestigungsmittels 38 in Richtung der Nut 2, wird der Nutstein 10 in die Nut 2 einer Profilschiene 1 weiter eingebracht. Eine Drehung des Befestigungsmittels 38 ist erst möglich, wenn das Befestigungsmittel 38 zum einen die Drehschutzeinrichtung 61 überwunden hat und zum anderen der Nutstein 10 weit oder tief genug in die Nut 2 eingesetzt beziehungsweise eingetaucht ist. Hierbei ist die Drehschutzeinrichtung 61 bevorzugt derart dimensioniert, dass sie eine Drehung des Befestigungsmittels 38 erst dann ermöglicht, wenn der Nutstein 10 weit oder tief genug in die Nut 2 eingesetzt beziehungsweise eingetaucht ist. Dies kann durch eine längenmäßige Dimensionierung der Drehschutzeinrichtung 61 realisiert werden. Die längenmäßige Dimensionierung der Drehschutzeinrichtung 61 kann der Tiefe entsprechen, die der Nutstein 10 von seiner Standardposition in die Nut 2 abgesenkt werden muss.

Durch eine Drehung wird der Nutstein 10 von der Einsetzposition in die Verriegelungsposition überführt. Ist der Nutstein 10 in der Verriegelungsposition in der Profilschiene 1 angelangt, wird durch weiteres Drehen des Befestigungsmittels 38 der Nutstein 10 nicht weiter gedreht, sondern der Nutstein 10 über das Innengewinde 27 und das Außengewinde 39 des Befestigungsmittels 38 beziehungsweise deren Gewindesteigung nach oben gegen die Nutstege 6, 7 der Profilschiene 1 beziehungsweise der Nut 2 gezogen. Dadurch wird der Nutstein 10 in der Nut 2 verklemmt.

Um optisch anzuzeigen, ob der Nutstein 10 sich in der Verriegelungsposition oder in der in Fig. 8 dargestellten Einsetzposition befindet, ist der obere Bereich des Befestigungsmittels 38, welcher aus dem Hauptkörper 52 der Befestigungsvorrichtung 50 heraussteht, farblich gekennzeichnet. Sobald sich der Nutstein 10 in der Verriegelungsposition befindet, ist das Befestigungsmittels 38 in dem Hauptkörper 52 der Befestigungsvorrichtung 50 etwas abgesenkt. Hierdurch ist die farbliche Kennzeichnung im oberen Bereich des Befestigungsmittels 38 nicht mehr sichtbar. Dadurch ist für einen Benutzer der Befestigungsvorrichtung 50 erkennbar, dass sich die Befestigungsvorrichtung 50 im Verriegelungszustand befindet.

Die Aufnahme im unteren Bereich des Hauptkörpers 52 für einen Teil des Nutsteins 10 ist in Fig. 9 zur verdrehsicheren Aufnahme des Nutsteins 10 in einer vergrößerten Ansicht dargestellt.

Die Befestigungsvorrichtung 50 kann beispielsweise zur Befestigung von Dosenleisten in Serverschränken verwendet werden. Die Befestigungsvorrichtung 50 kann jedoch grundsätzlich zur Befestigung von beliebigen Objekten an einer Profilschiene 1 verwendet werden, sofern die Profischiene 1 einen entsprechend an den erfindungsgemäßen Nutstein 10 angepassten Querschnitt aufweist.

Mit einer Profilschiene und dem erfindungsgemäßen Nutstein ist es möglich, beliebige Objekte an der Profilschiene sicher zu befestigen, ohne dass die Profilschiene während des Befestigungsvorgangs und/oder während des Lösevorgangs eingesehen werden muss.

## Patentansprüche

1. Nutstein (10) zum lösbaren Befestigen eines Objektes an einer Profilschiene,
mit einer T-ähnlichen Grundform,
mit einem Nutsteinfuß, der als Basiskörper (13) ausgebildet ist,
mit einem ersten Aufbaukörper (11),
wobei der erste Aufbaukörper (11) auf dem Basiskörper (13) vorgesehen ist,
wobei eine erste Funktionsfläche (21) zum Definieren einer Entnahmeposition des Nutsteins (10) aus der Profilschiene (1) vorgesehen ist,
wobei eine zweite Funktionsfläche (22) zum Definieren einer Verriegelungsposition des Nutsteins (10) in der Profilschiene (1) vorgesehen ist, und
eine Einrichtung (27, 28) zum Verbinden mit einem Befestigungsmittel (38), welches mit dem Objekt zusammenwirkt, vorgesehen ist
**dadurch gekennzeichnet,**
**dass** ein zweiter Aufbaukörper (12) vorgesehen ist,
**dass** der zweite Aufbaukörper (12) auf dem ersten Aufbaukörper (11) vorgesehen ist,
**dass** die erste Funktionsfläche (21) am ersten Aufbaukörper (11) ausgebildet ist, und
**dass** die zweite Funktionsfläche (22) am zweiten Aufbaukörper (12) ausgebildet ist.

2. Nutstein (10) nach Anspruch 1,
**dadurch gekennzeichnet,**
**dass** die erste Funktionsfläche (21), die zweite Funktionsfläche (22) und der Basiskörper (13) ausgebildet sind, um eine Drehung des Nutsteins (10) in der Profilschiene (1) um einen Winkel, insbesondere im Bereich von 90°, zu ermöglichen,
**dass** ein Startbereich des Winkels durch die erste Funktionsfläche (21) definiert ist,
**dass** ein Endbereich des Winkels durch die zweite Funktionsfläche (22) definiert ist, und
**dass** die Drehung um eine Drehachse des Befestigungsmittels (38) vorgesehen ist.

3. Nutstein (10) nach Anspruch 1 oder 2,
**dadurch gekennzeichnet,**
**dass** die Einrichtung zum Verbinden mit einem Befestigungsmittel (38) als Innengewinde (27) ausgebildet ist,
**dass** ein Befestigungsmittel (38) vorgesehen ist und
**dass** das Befestigungsmittel (38) ein zum Innengewinde (27) komplementäres Außengewinde (39) aufweist.

4. Nutstein (10) nach einem der Ansprüche 1 bis 3,
**dadurch gekennzeichnet,**
**dass** die Einrichtung zum Verbinden mit einem Befestigungsmittel (38) als durch den Nutstein hindurch verlaufende Einrichtung (27, 28) ausgebildet ist.

5. Nutstein (10) nach einem der Ansprüche 1 bis 4,
**dadurch gekennzeichnet,**
**dass** der Basiskörper (13) im Wesentlichen die Grundfläche eines länglichen ersten Rechteckes aufweist,
**dass** der erste Aufbaukörper (11) im Wesentlichen die Grundfläche eines länglichen zweiten Rechteckes aufweist,
**dass** das längliche zweite Rechteck die gleiche oder eine kleinere Breite aufweist, wie das erste Rechteck,
**dass** das zweite Rechteck eine geringere Länge als das erste Rechteck aufweist, dass der zweite Aufbaukörper (12) eine kleinere Grundfläche als der erste Aufbaukörper aufweist, und
**dass** die Grundfläche des zweiten Aufbaukörpers (12) im Wesentlichen die Form eines Rechteckes mit angesetztem Dreieck aufweist.

6. Befestigungsvorrichtung (50) zum lösbaren Befestigen eines Objektes an einer Profilschiene,
mit einem Hauptkörper (52),
mit einem Befestigungsmittel (38)
mit einer Aufnahme und Führung (54) in dem Hauptkörper (52) für das Befestigungsmittel (38) und
mit einem Nutstein (10) nach einem der Ansprüche 1 bis 5, wobei der Nutstein (10) an einem Ende des Befestigungsmittels (38) vorgesehen ist.

7. Befestigungsvorrichtung (50) nach Anspruch 6,
**dadurch gekennzeichnet,**
**dass** das Befestigungsmittel (38) ein Außengewinde (39) aufweist und
**dass** das Außengewinde (39) mit einer Gewindesicherung ausgestattet ist.

8. Befestigungsvorrichtung (50) nach Anspruch 6 oder 7,
**dadurch gekennzeichnet,**
**dass** das Befestigungsmittel (38) im Bereich des Basiskörpers (13) des Nutsteins (10) eine Sperreinrichtung, insbesondere eine Prägung (41), aufweist, welche ein Entfernen des Befestigungsmittels (38) aus dem Nutstein (10) verhindert.

9. Befestigungsvorrichtung (50) nach einem der Ansprüche 6 bis 8,
**dadurch gekennzeichnet,**
**dass** im Bereich der Aufnahme und Führung (51) eine Federeinrichtung (56) vorgesehen ist, um das Befestigungsmittel (38) mit dem Nutstein (10) in Richtung des Hauptkörpers (52) vorzuspannen.

10. Befestigungsvorrichtung (50) nach einem der Ansprüche 6 bis 9,
**dadurch gekennzeichnet,**
**dass** eine Drehschutzeinrichtung (61) für das Befestigungsmittel (38) vorgesehen ist,
wobei durch Krafteinwirkung auf das Befestigungsmittel (38) in Richtung des Nutsteins (10) die Drehschutzeinrichtung (61) überwindbar ausgebildet ist.

11. Befestigungsvorrichtung (50) nach einem der Ansprüche 6 bis 10,
**dadurch gekennzeichnet,**
**dass** eine Anzeigeeinrichtung (63) für den Verriegelungszustand des Nutsteins (10), insbesondere am Befestigungsmittel (38), ausgebildet ist.

12. Befestigungssystem (80)
mit mindestens einer Befestigungsvorrichtung (50) nach einem der Ansprüche 6 bis 11 und
mit einer Profilschiene (1) mit
einer hinterschnittenen, einen Kragen (3) ausweisenden Nut (2),
welche einen T-ähnlichen Querschnitt aufweist
wobei der Querschnitt asymmetrischen ausgebildet ist,
eine lange(4) und eine kurze (5) seitliche Flanke ausgebildet sind wobei die beiden Flanken (4, 5) gegenüberliegend angeordnet sind.

13. Befestigungssystem (80) nach Anspruch 12,
**dadurch gekennzeichnet,**
**dass** die Drehschutzeinrichtung (61) ausgebildet ist, um nach Einführen des Nutsteins (10) in die Nut (2) ein Drehen des Befestigungsmittels (38) zu ermöglichen.

## Claims

1. Slot-nut (10) for detachably fastening an object to a profile rail, with a T-like basic shape,
with a Slot-nut base which is formed as a base body (13),
with a first superstructure element (11),
wherein the first superstructure element (11) is provided on the base body (13), wherein a first functional surface (21) is provided to define a removal position of the Slot-nut (10) from the profile rail (1),
wherein a second functional surface (22) is provided to define a locked position of the Slot-nut (10) in the profile rail (1), and
a means (27, 28) for connection to a fastening means (38) which cooperates with the object is provided,
**characterised in that**
a second superstructure element (12) is provided,
the second superstructure element (12) is provided on the first superstructure element (11),
the first functional surface (21) is formed on the first superstructure element (11), and
the second functional surface (22) is formed on the second superstructure element (12).

2. Slot-nut (10) according to claim 1,
**characterised in that**
the first functional surface (21), the second functional surface (22) and the base body (13) are formed in order to enable a rotation of the Slot-nut (10) in the profile rail (1) about an angle, in particular in the region of 90°,
a start region of the angle is defined by the first functional surface (21),
an end region of the angle is defined by the second functional surface (22), and the rotation about a rotation axis of the fastening means (38) is provided.

3. Slot-nut (10) according to claim 1 or 2,
**characterised in that**
the means for connecting to a fastening means (38) is formed as an inner thread (27),
a fastening means (38) is provided and
the fastening means (38) comprises an outer thread (39) complementary to the inner thread (27).

4. Slot-nut (10) according to one of the claims 1 to 3,
**characterised in that**
the means for connection to a fastening means (38) is formed as a means (27, 28) extending through the Slot-nut.

5. Slot-nut (10) according to one of the claims 1 to 4,
**characterised in that**
the base body (13) essentially comprises the base area of an elongated first rectangle,
the first superstructure element (11) essentially comprises the base area of an elongated second rectangle,
the elongated second rectangle has the same or a smaller width than the first rectangle,
the second rectangle has a shorter length than the first rectangle,
the second superstructure element (12) has a smaller base area than the first superstructure element, and
the base area of the second superstructure element (12) has essentially the form of a rectangle with a positioned triangle.

6. Fastening device (50) for detachably fastening an object to a profile rail, with a main body (52),
with a fastening means (38),
with a recess and guide (54) in the main body (52) for the fastening means (38) and
with a Slot-nut (10) according to one of the claims 1 to 5, wherein the Slot-nut (10) is provided at an end of the fastening means (38).

7. Fastening device (50) according to claim 6,
**characterised in that**
the fastening means (38) comprises an outer thread (39) and
the outer thread (39) is equipped with a thread securing element.

8. Fastening device (50) according to claim 6 or 7,
**characterised in that**
the fastening means comprises in the region of the base body (13) of the Slot-nut (10) a locking means, in particular an embossment (41), which prevents removal of the fastening means (38) from the Slot-nut (10).

9. Fastening device (50) according to one of the claims 6 to 8,
**characterised in that**
a spring means (56) is provided in the region of the recess and guide (51) in order to pre-tension the fastening means (38) with the Slot-nut (10) in the direction of the main body (52).

10. Fastening device (50) according to one of the claims 6 to 9,
**characterised in that**
a rotation protection means (61) is provided for the fastening means (38), wherein through the effect of force on the fastening means (38) in the direction of the Slot-nut (10) the rotation protection means (61) is formed so that it can be overcome.

11. Fastening device (50) according to one of the claims 6 to 10,
**characterised in that**
a display means (63) for the locked state of the Slot-nut (10) is formed, in particular on the fastening means (38).

12. Fastening system (80),
with at least one fastening device (50) according to one of the claims 6 to 11 and with a profile rail (1) with
an undercut groove (2) comprising a collar (3),
which groove has a T-like cross-section,
wherein the cross-section is formed asymmetrically,
a long (4) and a short (5) side flank are formed,
wherein the two flanks (4, 5) lie opposite.

13. Fastening system (80) according to claim 12,
**characterised in that**
the rotation protection means (61) is formed in order to facilitate, after introduction of the Slot-nut (10) into the groove (2), a rotation of the fastening means (38).

## Revendications

1. Coulisseau (10) pour la fixation amovible d'un objet sur un rail profilé, avec une forme de base semblable à un T,
avec un pied de coulisseau qui est conformé en corps de base (13),
avec un premier corps rapporté (11),
dans lequel le premier corps rapporté (11) est prévu sur le corps de base (13),
dans lequel une première surface fonctionnelle (21) est prévue pour définir une position de retrait du coulisseau (10) depuis le rail profilé (1),
dans lequel une deuxième surface fonctionnelle (22) est prévue pour définir une position de verrouillage du coulisseau (10) dans le rail profilé (1), et
un dispositif (27, 28) est prévu pour établir une liaison avec un moyen de fixation (38), qui coopère avec l'objet,
***caractérisé***
***en ce qu*'**un deuxième corps rapporté (12) est prévu,
en ce *que* le deuxième corps rapporté (12) est formé sur le premier corps rapporté (11).
*en ce que* la première surface fonctionnelle (21) est formée sur le premier corps rapporté (11),
et
*en ce que* la deuxième surface fonctionnelle (22) est formée sur le deuxième corps rapporté (12).

2. Coulisseau (10) selon la revendication 1,
***caractérisé***
***en ce que*** la première surface fonctionnelle (21), la deuxième surface fonctionnelle (22) et le corps de base (13) sont conformés pour permettre une rotation du coulisseau (10) dans le rail profilé (1), d'un certain angle, en particulier de l'ordre de 90°,
*en ce qu*'une zone de début de l'angle est définie par la première surface fonctionnelle (21),
*en ce qu*'une zone de fin de l'angle est définie par la deuxième surface fonctionnelle (22), et
***en ce que*** la rotation est prévue autour d'un axe de rotation du moyen de fixation (38).

3. Coulisseau selon la revendication 1 ou 2,
***caractérisé***
***en ce que*** le dispositif de jonction avec un moyen de fixation (38) est conformé en filetage intérieur (27),
en ce *qu*'il est prévu un moyen de fixation (38), et
***en ce que*** le moyen de fixation (38) présente un filetage extérieur (39) complémentaire du filetage intérieur (27).

4. Coulisseau selon l'une quelconque des revendications 1 à 3, ***caractérisé en* ce *que*** le dispositif de jonction avec un moyen de fixation (38) est conformé en dispositif (27, 28) s'étendant à travers le coulisseau.

5. Coulisseau selon l'une quelconque des revendications 1 à 4,
***caractérisé***
***en ce que*** le corps de base (13) constitue pour l'essentiel la surface de base d'un premier rectangle oblong,
***en ce que*** le premier corps rapporté (11) constitue pour l'essentiel la surface de base d'un deuxième rectangle oblong,
***en ce que*** le deuxième rectangle oblong présente une largeur identique ou inférieure à celle du premier rectangle,
***en ce que*** le deuxième rectangle présente une longueur inférieure à celle du premier rectangle,
***en ce que*** le deuxième corps rapporté (12) constitue une surface de base plus petite que celle du premier corps rapporté, et
***en ce que*** la surface de base du deuxième corps rapporté (12) présente pour l'essentiel la forme d'un rectangle avec un triangle rapporté.

6. Dispositif de fixation (50) pour la fixation amovible d'un objet sur un rail profilé,
avec un corps de base (52),
avec un moyen de fixation (38),
avec un logement et guidage (54) dans le corps principal (52) pour le moyen de fixation (38), et
avec un coulisseau (10) selon l'une quelconque des revendications 1 à 5, dans lequel le coulisseau (10) est prévu à une extrémité du moyen de fixation (38).

7. Dispositif de fixation (50) selon la revendication 6,
***caractérisé***
***en ce que*** le moyen de fixation (38) comprend un filetage extérieur (39) et
***en ce que*** le filetage extérieur (39) est muni d'un frein de filetage.

8. Dispositif de fixation (50) selon la revendication 6 ou 7,
***caractérisé en ce que*** le moyen de fixation (38) comprend, au niveau du corps de base (13) du coulisseau (10), un dispositif de blocage, en particulier un estampage (41), qui empêche un retrait du moyen de fixation (38) hors du coulisseau (10).

9. Dispositif de fixation (50) selon l'une quelconque des revendications 6 à 8,
***caractérisé en ce qu*'**au niveau du logement et guidage (51) est prévu un dispositif à ressort (56) pour précontraindre le moyen de fixation (38) avec le coulisseau (10) en direction du corps principal (52).

10. Dispositif de fixation (50) selon l'une quelconque des revendications 6 à 9,
***caractérisé en ce qu*'**un dispositif anti-rotation (61) est prévu pour le moyen de fixation (38),
dans lequel le dispositif anti-rotation (61) est conformé pour pouvoir être surmonté par application de force sur le moyen de fixation (38) en direction du coulisseau (10).

11. Dispositif de fixation (50) selon l'une quelconque des revendications 6 à 10,
***caractérisé en ce qu*'**un dispositif indicateur (63) de l'état de verrouillage du coulisseau (10) est formé, en particulier sur le moyen de fixation (38).

12. Système de fixation (80),
avec au moins un dispositif de fixation (50) selon l'une quelconque des revendications 6 à 11, et
avec un rail profilé (1) avec
une rainure (2) en contre-dépouille comprenant un rebord (3),
qui comprend une section semblable à un T,
la section étant réalisée asymétrique,
un grand flanc latéral (4) et un petit flanc latéral (5) étant formés,
et les deux flancs (4, 5) se faisant face.

13. Système de fixation selon la revendication 12, ***caractérisé en ce que*** le dispositif anti-rotation (61) est conformé pour permettre une rotation du moyen de fixation (38) après introduction du coulisseau (10) dans la rainure (2).
